# EUROPÄISCHE PATENTSCHRIFT

(11) **EP 2 370 285 B1**
(45) Veröffentlichungstag und Bekanntmachung des Hinweises auf die Patenterteilung: **21.01.2015**
(21) Anmeldenummer: 09764793.7
(22) Anmeldetag: 01.12.2009
(51) Int. Cl.: B60K 6/365, B60K 6/442, B60K 6/547, F16H 57/02, F16H 57/04, F16H 61/00

(54) **HYBRID-ANTRIEBSEINHEIT UND VERFAHREN ZU DEREN BETRIEB**
HYBRID DRIVE UNIT AND METHOD FOR THE OPERATION THEREOF
UNITE D'ENTRAINEMENT HYBRIDE ET PROCEDE DE FONCTIONNEMENT

(30) Priorität: 01.12.2008 DE 102008037618; 09.09.2009 DE 102009043966
(43) Veröffentlichungstag der Anmeldung: 05.10.2011
(73) Patentinhaber: Getrag Getriebe Und Zahnradfabrik Hermann Hagenmeyer GmbH & Cie. KG, 74199 Untergruppenbach (DE)
(72) Erfinder: NETT, Hans-Peter, 53518 Adenau (DE); STEINBERG, Ingo, 50769 Köln (DE); KATHER, Lutz, 53909 Zülpich (DE); BRINGS, Wolfgang, 50769 Köln (DE); GÖTTERT, Christoph, 50670 Köln (DE); GRAVE, Christoph, 85055 Ingolstadt (DE); HAUPT, Jan, 51469 Bergisch Gladbach (DE); ULLMANN, David, 08289 Schneeberg (DE)
(74) Vertreter: Tersteegen, Felix
(86) Internationale Anmeldenummer: PCT/EP2009/066174
(87) Internationale Veröffentlichungsnummer: WO 2010/063735

(56) Entgegenhaltungen:
- WO-A1-2007/062630
- WO-A1-2010/029035
- WO-A2-99/21263
- US-A- 5 513 719
- US-A- 5 562 565

## Beschreibung

Die Erfindung betrifft eine Hybrid-Antriebseinheit für ein Hybridfahrzeug gemäß Oberbegriff des Anspruchs 1 und ein Verfahren zu deren Betrieb gemäß Oberbegriff des Anspruchs 8. Mit einer solchen Hybrid-Antriebseinheit kann das Fahrzeug je nach Betriebszustand elektromotorisch, verbrennungsmotorisch oder durch eine Kombination von elektromotorischem und verbrennungsmotorischem Antrieb angetrieben werden. Die Antriebseinheit umfasst eine elektrische Antriebsmaschine, eine verbrennungsmotorische Antriebsmaschine und eine kombinierte, als schaltbares Mehrganggetriebe fungierende Kupplungs- und Getriebebaugruppe, die zumindest einen ersten Gang und einen zweiten Gang zur Verfügung stellt.

Vor dem Hintergrund steigender Ölpreise und dem immer mehr in den Mittelpunkt rückenden Klimawandel ist die Automobilindustrie in jüngerer Zeit mehr denn je gefordert, Technologien zu entwickeln, die eine energieeffiziente Mobilität erlauben. Zu diesen Entwicklungen zählt die Hybridtechnologie, die sich - je nachdem ob das jeweilige Konzept die Hybridisierung des rein verbrennungsmotorischen Antriebs oder die Reichweitenerhöhung des rein elektromotorischen Antriebs durch Ergänzung des Antriebs durch einen Verbrennungsmotors vorsehen - grob in zwei Konzepte unterteilen lässt.

Beim ersten Konzept, allgemein auch als "Plug-In-Hybrid" bezeichnet, ist - ausgehend vom rein verbrennungsmotorischen Antrieb - zusätzlich bzw. neben dem Verbrennungsmotor auch ein elektromotorischer Antrieb vorgesehen. Die Implementierung der vollen verbrennungsmotorischen Leistung als auch das Vorhalten hoher elektrischer Leistung mit entsprechend dimensioniertem Energiespeicher führt allerdings dazu, dass die Fahrzeugmasse relativ hoch und das Kosten-Nutzen Verhältnis in Frage gestellt werden muss. Plug-In-Hybride verwenden also ähnliche dimensionierte Verbrennungsmotoren wie konventionelle, rein verbrennungsmotorisch angetriebene Fahrzeuge.

Das zweite Konzept, das allgemein auch als "Range-Extender" bezeichnet wird, stellt eine Sonderform der Hybridtechnologie dar. Ausgehend vom reinen Elektroantrieb ist zur Erhöhung der Reichweite ein im Verhältnis zum Gesamtantriebsleistungsbedarf gesehen kleiner Verbrennungsmotor vorgesehen, der einen Generator antreibt, mit dem die Batterie nachgeladen werden kann. Der Systemgedanke des "Range Extenders" zeichnet sich durch hohe elektrische Motorleistung sowie hohe Batteriekapazität und kleiner Verbrennungskraftmaschine aus. Verbrennungskraftmaschine mit Kraftstofftank stellen quasi einen zusätzlichen Energiespeicher oder eine Art Notstromaggregat dar, mit dem die Gefahr des oftmals beim reinen Elektroantrieb befürchteten "Liegenbleibens" minimiert werden soll. Dabei ist es sowohl bekannt, über den Verbrennungsmotor lediglich einen Generator zur Erzeugung elektrischer Antriebsenergie anzutreiben, als auch die verbrennungsmotorische Leistung direktin den Antriebsstrang zu einzuleiten.

Beide vorgenannten Konzepte haben den Nachteil, dass jeweils nicht die optimale Synergie zwischen Elektroantrieb und Verbrennungsmotorantrieb gefunden wird, wodurch wiederum die Größe und das Gewicht der Aggregate, die Kosten sowie die Effizienz des Systems nicht bis zum Bestpunkt optimiertwerden können.

Die Übertragung der Antriebsleistung erfolgt bei Hybridantrieben in aller Regel über ein zwischengeschaltetes Planetengetriebe mit Sonnenrad, Steg und Hohlrad. Je nachdem, welches dieser drei Eingangsglieder verbrennungsmotorisch und welches elektromotorisch angetrieben wird und an welchem dieser Eingangsglieder der Leistungsabtrieb zu den Antriebsrädern erfolgt, ergeben sich aufgrund der verschiedenen kinematischen Bedingungen unterschiedliche Problemstellungen.

Wird beispielsweise die Antriebsleistung am Hohlrad abgegriffen und treibt die Antriebsmaschine den Steg an, so wird das Antriebsmoment, das den Antriebsrädern zur Verfügung gestellt werden kann, aufgrund der Übersetzungsbedingung zum Hohlrad hin reduziert und mindert das Beschleunigungsverhalten sowie die Steigfähigkeit. Um hier passable Performancewerte zu erhalten, ist daher bei diesem Konzept eine starke Antriebsmaschine mit hohem Anfahrmoment zwingend erforderlich. Treibt die Antriebsmaschine das Hohlrad an, ist zu berücksichtigen, dass diese damit am niedrigen Drehzahlniveau des Abtriebs gekoppelt ist, was sich wiederum negativ auf die Baugröße einer E-Maschine auswirkt.

Von Bedeutung für die Alltagstauglichkeit eines Hybridantriebs ist insbesondere auch ein mehrgängiges Lastschaltgetriebe. Fehlt eine Übersetzungsstufe, kann keine geschwindigkeitsabhängige Kennfeldanpassung erfolgen und Verbrennungsmotor und E-Maschine sind in vielen Fahrzuständen weit entfernt von den kennfeldoptimalen Betriebspunkten zu betreiben.

Hybrid-Antriebseinheiten mit Planetengetrieben sind aus dem Stand der Technik bekannt. Die Druckschriften US 5,562,565 und gattungsgemäßer US 5,513,719 offenbaren Hybrid-Antriebseinheiten, bei denen die Antriebsleistungen in das Hohlrad oder in den Steg eines Planetengetriebes eingeleitet werden. Die WO 2007/062630 offenbart ein Hybridsystem, bei dem elektromotorische und verbrennungsmotorische Leistung in einem ersten Gang drehmomentaddierende in das Sonnenrad und in einem zweiten Gang drehzahladdierend in zwei verschiedene Eingangsglieder des Planetengetriebes eingeleitet werden. Die im Stand der Technik beschriebenen Anordnungen können mit Blick auf die nachfolgend beschriebenen Aufgaben, die die Erfindung sich stellt, noch verbessert werden.

In der Druckschrift WO 2010/029035 A1, welches Stand der Technik nach Artikel 54(3) Epü ist, ist eine Hybridantriebseinheit beschrieben, deren Ausgangsleistung über ein nachgeschaltetes Gruppengetriebe weitergeleitet wird. Als letztes Glied dieses Gruppengetriebes ist eine Bereichsgruppe vorgesehen, deren Eingangsglied das Sonnenrad ist.

Eine Aufgabe der Erfindung ist es, eine Hybrid-Antriebseinheit für ein Hybridfahrzeug zur Verfügung zu stellen, dass die oben beschriebenen Nachteile bekannter Hybridantriebe zu minimieren vermag. Insbesondere soll die Erfindung eine Hybrid-Antriebseinheit zur Verfügung stellen, die das effiziente Zusammenwirken der einzelnen Antriebe und der Antriebsstrangkomponenten (E-Maschine, Generator, Verbrennungsmotor, Übersetzungsgetriebe) ermöglicht, um hinsichtlich Reichweite, CO₂ Ausstoß und Fahrzeuggewicht Verbesserungen gegenüber bekannten Systemen zu erzielen.

Eine weitere Aufgabe der Erfindung ist es, die Kupplungs- und Getriebebaugruppe derart als Zweiganggetriebe auszugestalten und zu nutzen, dass sich auf einfache Weise eine Vielzahl von Antriebsmöglichkeiten ergeben. Neben dem rein elektromotorischen und dem rein verbrennungsmotorischen Fahren soll auch ein kombinierter Antrieb möglich sein, bei dem Elektromotor und Verbrennungsmotor jeweils einen Teil der Gesamtantriebsleistung abgeben, um die gesamte installierte elektromotorische und verbrennungsmotorische Antriebsleistung nutzen zu können. Für jede der vorgenannten Antriebsvarianten sollen beide Gänge der Kupplungs- und Getriebebaugruppe zur Verfügung stehen, so dass diese möglichst kosten- und bedarfsoptimiert ausgelegt werden können.

Eine weitere Aufgabe der Erfindung besteht darin, eine Hybrid-Antriebseinheit mit einer schaltbaren, zumindest zweigängigen Kupplungs- und Getriebebaugruppe zur Verfügung zu stellen, in der ein Rekuperationsbetrieb in beiden Gängen möglich ist. Insbesondere soll ein Gangwechsel auch im Rekuperationsbetrieb möglich sein, um einen Generator je nach aktueller Fahrzeuggeschwindigkeit optimal betreiben zu können.

Eine weitere Aufgabe der Erfindung ist es, eine Hybrid-Antriebseinheit zur Verfügung zu stellen, die eine hohe Alltagstauglichkeit aufweist. Insbesondere soll eine große Steigfähigkeit und ein gutes Anfahrverhalten realisiert werden.

Außerdem soll eine Hybrid-Antriebseinheit geschaffen werden, deren Kupplungs- und Getriebebaugruppe einen Gangwechsel und/oder das Zu- oder Abschalten einzelner Antriebsaggregate auf besonders einfache Weise, insbesondere auch unter Last, ermöglicht.

Im Hinblick auf die Kupplungs- und Getriebebaugruppe und auf die gesamte Hybrid-Antriebseinheit ist es eine weitere Aufgabe, diese so zu gestalten, dass sie nur einen geringen Bauraum erfordert.

Zur Lösung der Aufgaben sieht die Erfindung vor, dass eine Kupplungsvorrichtung vorgesehen ist, mit der der Verbrennungsmotor mit dem Sonnenrad formschlüssig koppelbar ist und die Kupplungseinrichtung innerhalb des Sonnenrads angeordnet ist.

Dieser Ansatz stellt zunächst eine Abkehr von der vorherrschenden Überlegung dar, in zumindest einem Gang eine Leistungsverzweigung vorzusehen. Diese Leistungsverzweigung, bei der verbrennungsmotorische Leistung und elektromotorische Leistung über zumindest zwei Zweige (Wege) durch parallele Leistungseinleitung in unterschiedliche Eingangsglieder übertragen wird, ermöglicht einen stufenlosen Betrieb der elektromotorischen Antriebsmaschine. Dies wird im Hinblick auf den weiten, leistungskonstanten Drehzahlbereich als allgemein vorteilhaft angesehen. Dieser Vorteil geht aber mit dem Nachteil einher, das Antriebsmoment an einem anderen Eingangsglied desselben Planetengetriebes abstützen zu müssen. Es wird also insbesondere ein Hybrid Antriebssystem mit einem schaltbaren Planetengetriebe vorgeschlagen, bei dem sowohl der Verbrennungsmotor als auch die E-Maschine über das gleiche Eingangsglied eines Getriebes miteinander koppelbar sind. Weder im ersten noch im zweiten Gang noch in eventuell vorzusehenden weiteren Gängen wird die aus verbrennungsmotorischer Antriebsleistung und elektromotorischer Antriebsleistung kombinierte Gesamtantriebsleistung damit leistungsverzweigt übertragen.

Um den Verbrennungsmotor möglichst kennfeldoptimal nutzen zu können und die angestrebte Steig- und Anfahrfähigkeit zu erzielen, ist ein Mehrganggetriebe, beispielsweise ein 2-Gang Getriebe, erforderlich. Dieses Getriebe sollte aus Komfortgründen ein Lastschaltgetriebe sein und es sollte außerdem im Hinblick auf Kosten und Bauraumbedarf einen einfachen Aufbau aufweisen. Als Getriebebauform bietet sich daher ein Planetengetriebe an. Ein Planetengetriebe weist ein Sonnenrad, einen Steg und ein Hohlrad auf. Dadurch, dass sowohl die Leistung der Verbrennungskraftmaschine und die der E-Maschine bestimmungsgemäß je nach Betriebszustand gleichzeitig oder selektiv in ein Eingangsglied der Kupplungs- und Getriebebaugruppe, vorzugsweise die Sonne, eingeleitet werden, lassen sich durch gezielten Eingriff auf die Eingangsglieder (Sonne, Steg, Hohlrad) von außen verschiedene Übersetzungen realisieren und gleichzeitig ein einfacher Aufbau und geringer Bauraumbedarftrotz Lastschaltbarkeit abbilden.

Wie eingangs erwähntist es beim Konzept des "Range Extenders", der nur über eine geringe installierte Leistung vom Verbrennungsmotor und auch vom Generator verfügt, wichtig, dass für das Anfahren sowie für eine gute Steigfähigkeit die größtmögliche Übersetzung des Planetengetriebes genutzt werden kann. Daher bietet es sich an, vorzugsweise beide Antriebsmaschinen, also Verbrennungsmotor und Elektromotor, mit der Sonne zu koppeln. Der Abtrieb zu den Rädern erfolgt bevorzugt über den Steg. Aufgrund der kinematischen Bedingung ergibt sich hier das Summenmoment von Sonne und Hohlrad (statische Grundgleichung M_{steg}= Mₛₒₙₙₑ + M_{Hohlrad}). Das maximale Drehmoment liegt also stets an den Antriebsrädern an.

Das Hohlrad kann dabei in konstruktiv besonders einfacher Weise relativ zum Fahrzeug drehfest gehalten werden, zum Beispiel über eine Bremse, die das Hohlrad drehfest mit dem Gehäuse der Baugruppe verbindet. In diesem Fall wird die größtmögliche Übersetzung für den Abtrieb genutzt (i_{Umlauf} (M_{steg}) = i_{stand} +1). Insbesondere die Verbrennungskraftmaschine soll über eine Kupplung direkt mit den Antriebsrädern verbunden werden können. Es ist somit sowohl serieller als auch paralleler Hybridbetrieb möglich.

Durch die vorstehend erläuterte Ausgestaltung eines Antriebsstrangs für ein Hybridfahrzeug ergeben sich insbesondere folgende Vorteile:

Die Systemperformance wird insgesamt verbessert. Durch die Nutzung der maximalen Planetenübersetzung und den Abtrieb über den Steg kann trotz geringer installierter elektrischer Antriebsleistung und geringer Verbrennungsmotorleistung ein hohes Raddrehmoment erzeugt werden. Durch die Parallelschaltung von Verbrennungsmotor und elektrischer Antriebsmaschine an ein einziges Eingangsglied der Kupplungs- und Getriebebaugruppe, insbesondere an die Sonne des Planetengetriebes, kann beim Boostbetrieb, also bei gleichzeitiger Nutzung von Verbrennungskraftmaschine und E-Maschine, das Antriebsmoment nochmals gesteigert werden.

Auch hinsichtlich des Verbrauchs ergeben sich Vorteile. Durch Nutzung des Planetengetriebes als Zweiganggetriebe können die elektrische Antriebsmaschine sowie der Verbrennungsmotor weitestgehend im jeweils optimalen Betriebspunkt betrieben werden. Im Hochgeschwindigkeitsbereich läuft das Planetengetriebe als Block um, sodass keine Verluste an der Verzahnung (Wälzleistung) und an den Lagern (Lagerreibung) entstehen. Durch die freie Wahl der Betriebszustände, die entsprechend des Fahrzustands optimal ausgewählt werden können, entsteht ein größtmögliches CO₂ Reduzierungspotential. Die Fahr- bzw. Betriebszustände sind insbesondere:
a) Elektromotorisches Fahren (primäres Fahren/gespeist über Akkumulator)
b) Elektromotorisches Fahren gespeist über die Verbrennungskraftmaschine
c) Hybridisches Fahren (Boosten)
d) Verbrennungsmotorisches Fahren

In allen Fahrzuständen können beide von der Kupplungs- und Getriebebaugruppe zur Verfügung gestellten Gänge genutzt werden. Dies gilt außerdem auch für den Rekuperationsbetrieb.

Packagingvorteile ergeben sich außerdem durch die koaxiale Anordnung von den Antriebsaggregaten, die eine kompakte Bauweise ermöglicht.

Dadurch, dass nur eine relativ kleine Verbrennungskraftmaschine erforderlich ist, wird außerdem das Downsizing der Verbrennungskraftmaschine möglich. Die Verbrennungskraftmaschine übernimmt im Wesentlichen stationäres Fahren, während die elektromotorische Antriebsmaschine im Wesentlichen den dynamischen Fahranteil abdeckt. Eine kleine VKM bedeutet dabei sowohl niedrigen Verbrauch, niedriges Gewicht, geringere Kosten und minimierten Bauraumbedarf.

Die gewählte Anordnung von Motor und Getriebe entspricht außerdem der heute üblichen Anordnung, sodass bei Umstellung auf Hybridtechnik die Fahrzeugarchitektur weitgehend unangetastet beibehalten werden kann, was die Integration des beschriebenen Antriebsstrangs in bestehende Systeme besonders einfach macht.

Neben dem beschriebenen Antriebsstrangkonzept für ein Hybridfahrzeug wird das beschriebene Verfahren zum Betreiben eines Hybridfahrzeugs ebenfalls als zur Erfindung gehörig angesehen.

Weitere Merkmale und Vorteile der Erfindung ergeben sich aus den Unteransprüchen und aus der nachfolgenden Beschreibung bevorzugter Ausführungsbeispiele anhand der Figuren.

In den Figuren zeigt:
Fig. 1 eine schematische Ansicht einer Hybrid-Antriebseinheit,
Fig. 2 zwei Fahrzustände bei rein verbrennungsmotorischen Antrieb,
Fig. 3 zwei Fahrzustände bei rein elektromotorischem Antrieb,
Fig. 4 zwei Fahrzustände bei kombiniertem elektro- und verbrennungsmotorischem Antrieb,
Fig. 5 das Rückwärtsfahren mit voller bzw. leerer Batterie,
Fig. 6 die Nutzung der Antriebseinheit als serieller Hybrid,
Fig. 7 die Nutzung des Verbrennungsmotors zum Aufladen der Batterie,
Fig. 8 den Fahrzustand des Rekuperierens bei verschiedenen Fahrzeuggeschwindigkeiten,
Fig. 9a bis 9d den Betrieb der Antriebseinheit mit einem kombinierten Generator/Motor in verschiedenen Fahrzuständen,
Fig. 10a bis 10c alternative Ausgestaltungen der Antriebseinheit mit zusätzlichen Kupplungen und/oder Getriebestufen,
Fig. 11 eine schematische Darstellung einer optimalen Auslegung der Übersetzung eines Zweigangplenetengetriebes für die Hybrid-Antriebseinheit,
Fig. 12 eine Schnittansicht durch eine Hybrid-Antriebseinheit ohne angeflanschten Verbrennungsmotor und Generator,
Fig. 13 eine Detailansicht einer Kupplungseinheit zur Kopplung des Verbrennungsmotors an das Eingangsglied der Kupplungs- und Getriebebaugruppe,

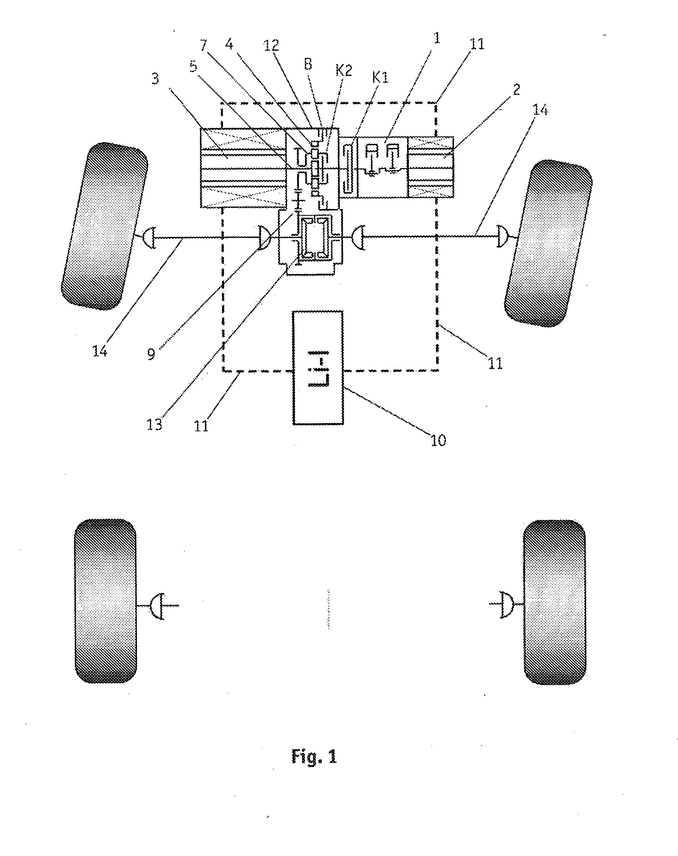

In Figur 1 ist die Hybrid-Antriebseinheit schematisch dargestellt. Die Antriebseinheit umfasst einen Verbrennungsmotor 1, einen Generator 2 und eine E-Maschine 3. Zwischen Verbrennungsmotor 1 und E-Maschine 3 ist ein Planetengetriebe 4 angeordnet. Verbrennungsmotor 1 und E-Maschine 3 sind über eine Welle, bevorzugt über eine gemeinsame Welle 5, mit dem gleichen Eingangsglied, bevorzugt mit der Sonne 6 des Planetengetriebes, verbunden. Der Abnahme der Abtriebsleistung erfolgt über den Steg 7 des Planetengetriebes 4.

Zwischen Verbrennungsmotor 1 und Sonne 6 ist eine erste Kupplung K1 angeordnet, die dazu dient, den Verbrennungsmotor 1 je nach Bedarf an- oder abzukoppeln. Durch Schließen der zweiten Kupplung K2 wird der Planetensatz bzw. der Steg 7 mit der Sonne 6 verblockt und das Antriebsmoment an der Sonne 6 gelangt mit einer Planetenübersetzung von 1:1 weitestgehend verlustfrei zum Abtrieb. Die Kupplung K2 verblockt also zwei Glieder des Planetengetriebes 4, so dass diese mit einer Drehzahl als Block umlaufen, wenn die Kupplung K2 geschlossen ist. Es "fließt" ausschließlich Kupplungsleistung. Die Übersetzung zwischen diesen beiden Eingangsgliedern und somit zwischen Antriebsglied und Abtriebsglied beträgt demnach 1:1. Außerdem lässt sich das Hohlrad 8 über eine Bremse B mit dem Gehäuse 12 drehfest verbinden. Mit der Bremse B kann das Hohlrad 8 somit zum Gehäuse 12 abgestützt werden, so dass sich am Abtrieb bei geöffneter Kupplung K2 die größtmögliche Planetenübersetzung ergibt.

Es können auf diese besonders einfache Weise unterschiedliche Übersetzungen realisiert werden, ohne dabei die bereits bekannten Hybridantriebsstränge nennenswert erweitern zu müssen. Durch Nutzung der Bremse B und der Kupplung K2 läst sich ein Zweiganggetriebe in konstruktiv einfacher Weise realisieren.

Dem Stegabtrieb des Planetengetriebes 4 kann eine Übersetzungsstufe 9, auch alternativ als "Final Drive" bezeichnet, nachgeschaltet sein, die dazu dient, die Übersetzung des Planetengetriebes 4 nochmals zu multiplizieren und die Distanz zwischen der Antriebseinheit und dem Differential 13 bzw. den Seitenwellen 14 der Antriebsräder zu überbrücken. Die Auslegung des Planetengetriebes bzw. des Antriebsstrangs und die damit realisierten Übersetzungen, einschließlich möglicher voroder nachgeschalteter Übersetzungen, wird der Fachmann für den jeweiligen Anwendungsfall zu optimieren wissen.

In Figur 1 ist weiter erkennbar, dass der Elektromotor 3 seine elektrische Energie über die Batterie 10 bezieht. Die Batterie, in Figur 1 als Lithium-Ionen Batterie gekennzeichnet, ist über Leitungen 11 mit den beiden Elektromaschinen (elektrische Antriebsmaschine 3 und Generator 2) verbunden. Außerdem ist der Generator 2 über Leitungen 11 mit der Batterie 10 verbunden.

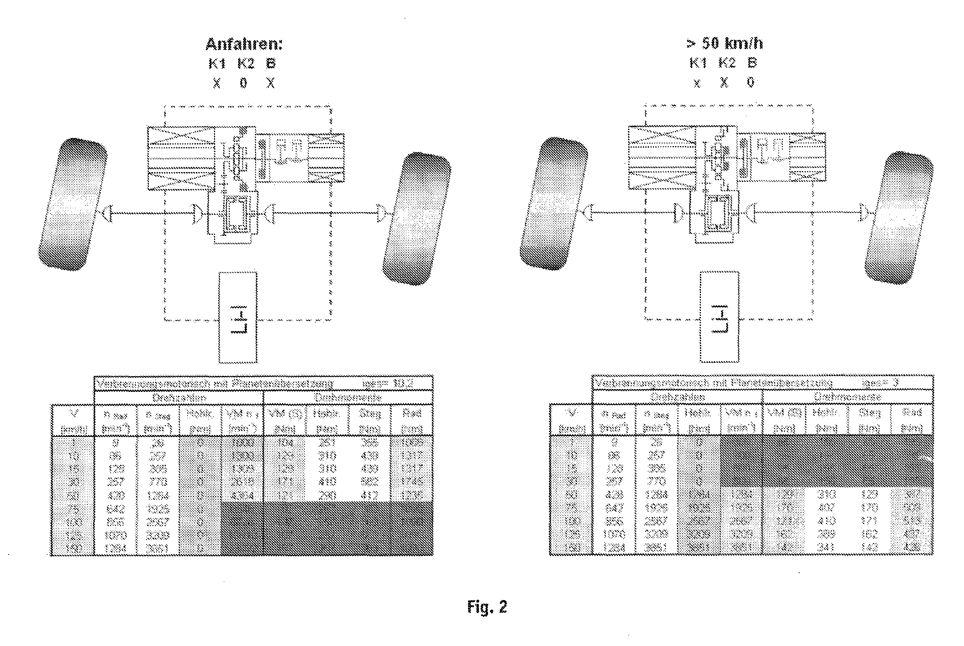

Anhand der weiteren, nachfolgenden Figuren werden einzelne Fahrzustände der in Figur 1 gezeigten Hybrid-Antriebseinheit erläutert. Die Bezeichnung einzelner Komponenten ist von Figur 1 auf die Figuren 2 bis 10c übertragbar. Die unter den nachfolgenden schematischen Abbildungen teilweise dargestellten Tabellen verdeutlichen anhand von Modellrechnungen in Abhängigkeit der Fahrzeuggeschwindigkeit bestimmte Betriebsparameter wie die Drehzahlen und Momente von Verbrennungsmotor und Getriebegliedern sowie die auf die Antriebsräder wirkenden Momente. In den Tabellen farblich rot unterlegt ist jeweils der Kennfeldbereich, in dem der verbrennungsmotorische Betrieb wegen der sich aufgrund der jeweils für die Modellrechnung gültigen Annahmen ergebenden Motordrehzahlen eher ausscheidet. Ein den Kürzeln K1, K2 oder B zugeordnetes "X" bedeutet, die jeweilige Kupplung bzw. Bremse ist geschlossen, ein "0" bedeutet, die jeweilige Kupplung bzw. Bremse ist geöffnet. Um zu verdeutlichen, dass eine Kupplung bzw. die Bremse geschlossen ist, ist deren reibschlüssig arbeitender Randbereich außerdem farblich rot unterlegt. Auch die für den jeweils dargestellten Fahrzustand beitragenden Antriebskomponenten sind zur Verdeutlichung des Antriebsleistungsflusses farblich rot hervorgehoben.

Figur 2 illustriert das rein verbrennungsmotorische Fahren, und zwar einmal für das Anfahren sowie für einen Fahrzustand bei höheren Geschwindigkeiten, hier beispielhaft bei einer Geschwindigkeit größer 50 km/h. In beiden Fällen ist der Verbrennungsmotor über die Kupplung K1 mit der Sonne verbunden. Um beim Anfahren eine große Übersetzung zu erhalten, wird das Hohlrad über die Bremse B zum Gehäuse hin abgestützt. Damit die Motordrehzahl bei höherer Geschwindigkeit begrenzt bleibt, wird ab ca. 50km/h die Bremse B gelöst und die Kupplung K2 geschlossen. Somit läuft der Planetensatz mit der Übersetzung 1:1 verlustfrei als Block um.

Durch die starre Kopplung der E-Maschine zur Sonne, läuft bei den in Figur 2 gezeigten Fahrzuständen der Rotor quasi verlustfrei mit. Es fließt kein Strom von der Batterie zum elektrischen Antriebsmaschine. Alternativ kann der Rotor aber auch über eine in Figur 1 und 2 nicht dargestellte zusätzliche Kupplung entkoppelt werden.

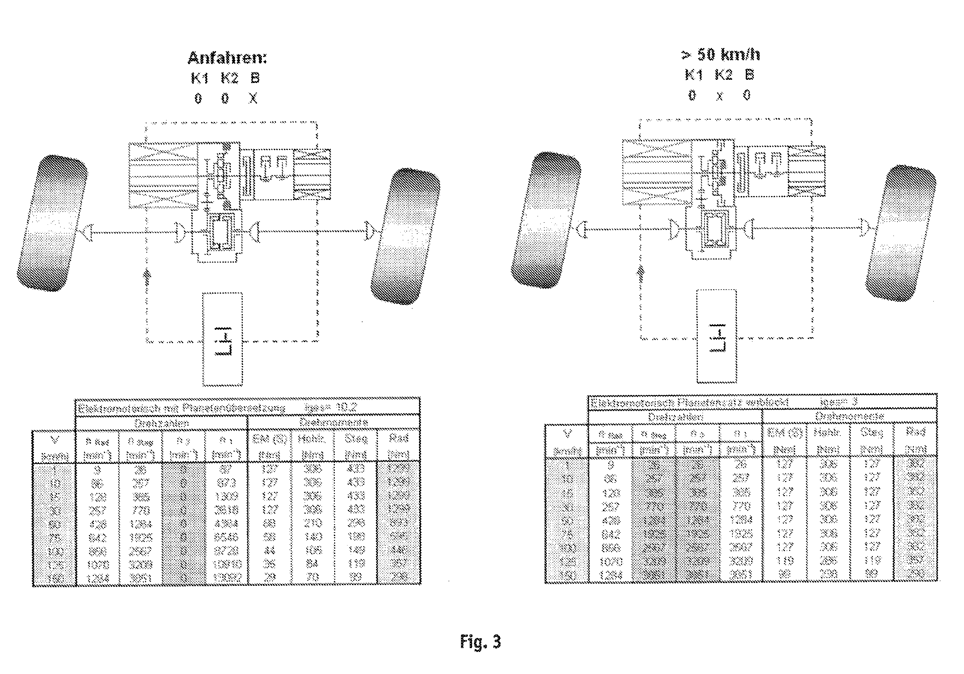

Figur 3 zeigt das rein elektromotorische Fahren. Durch Öffnen der Kupplung K1 ist der Verbrennungsmotor abgekoppelt. Die E-Maschine überträgt das Antriebsmoment auf die Sonne des Planetengetriebes. Analog dem verbrennungsmotorischen Fahren wird durch Ansteuern der Bremse B und der Kupplung K2 das Planetengetriebe als Zweiganggetriebe genutzt, um die E-Maschine im optimalen Betriebskennfeld betreiben zu können.

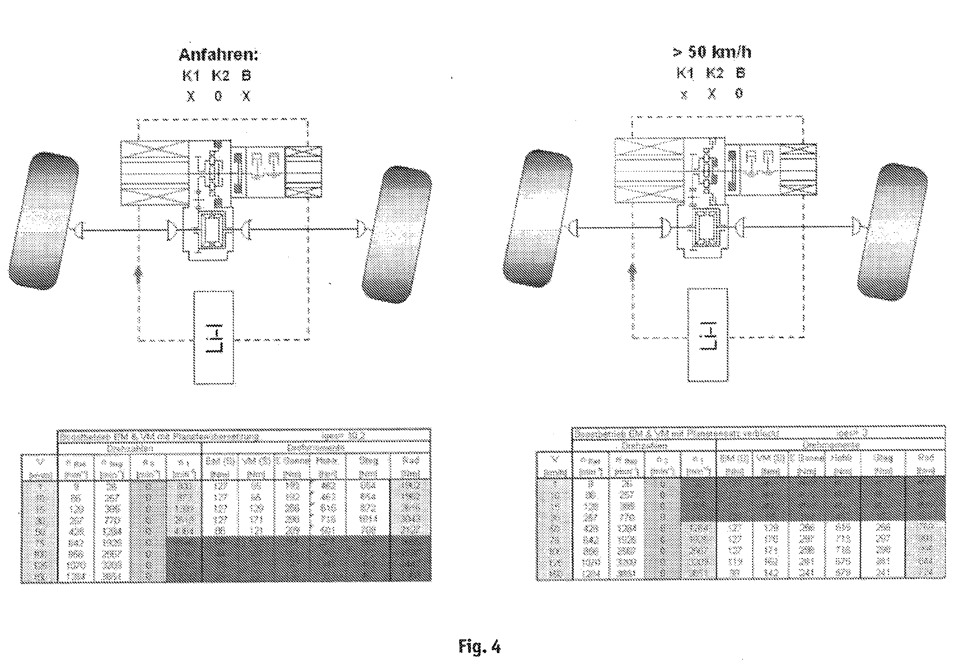

In Figur 4 ist der so genannte "Boostbetrieb" veranschaulicht, bei dem Elektromotor und Verbrennungsmotor das Fahrzeug nebeneinander antreiben. Durch Schließen der Kupplung K1 lassen sich der Verbrennungsmotor und der Elektromotor mit der Sonne verbinden, so dass beide Antriebsleistungen parallel (Boostbetrieb) zum Vortrieb genutzt werden können. Der Unterschied zu Figur 2 wird insbesondere dadurch deutlich, dass in Figur 4, veranschaulicht durch das farblich rote Hervorheben der Strom führenden Leitung und den eingezeichneten Pfeil, Strom von der Batterie zum Elektromotor fließt. Da sich durch Schließen der Bremse B auch hier eine große Übersetzung am Planetengetriebe einstellt, ergeben sich besonders hohe Antriebsmomente, die das Beschleunigungsverhalten und auch die Steigfähigkeit gegenüber dem rein verbrennungsmotorischen oder dem rein elektromotorischen Antrieb nochmals signifikant verbessern. Bei Geschwindigkeiten von mehr als den hier rein beispielhaft angegebenen 50 km/h und durch Schließen der Kupplung K2 läuft der Planetensatz dann wiederum mit der Übersetzung 1 als Block um und reduziert die Motordrehzahl bei höheren Geschwindigkeiten.

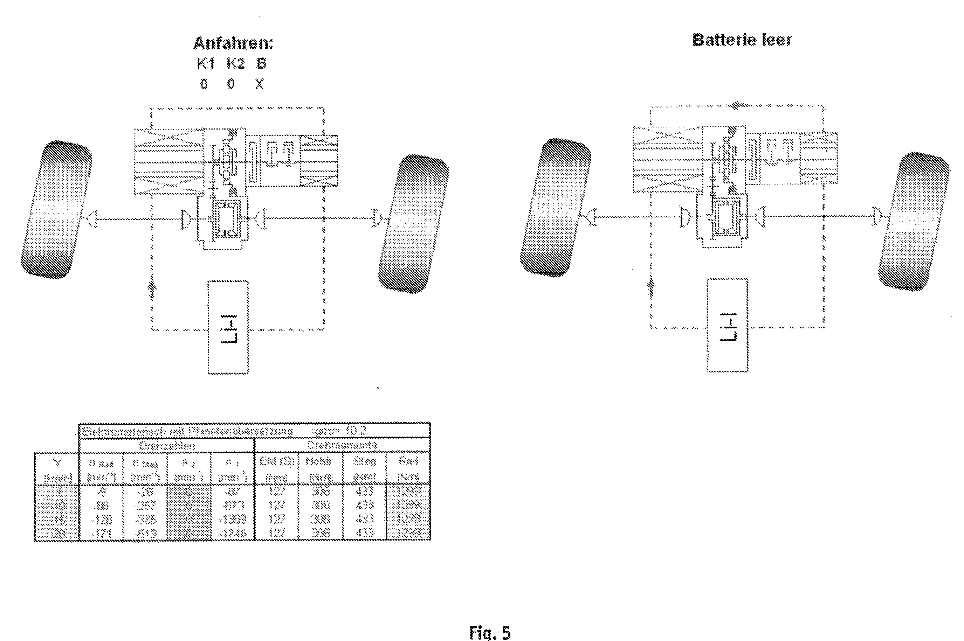

Figur 5 verdeutlicht, dass mit der beschriebenen Hybrid-Antriebseinheit auch rückwärts gefahren werden kann, und zwar unabhängig vom Ladezustand der Batterie und ohne das Vorsehen einer zusätzlichen, die Drehrichtung umkehrenden Gangstufe. Die Anordnung des Planetengetriebes beinhaltet die Möglichkeit der Drehrichtungsumkehr nicht. Zum Rückwärtsfahren wird daher der Elektromotor in der anderen Drehrichtung betrieben. Durch Schließen der Bremse B ergibt sich wie bei der Vorwärtsfahrt eine große Übersetzung, was für ein hohes Anfahrtsmoment sorgt. Die nötige Energie wird von der Batterie bereitgestellt, wie der linke Teil von Figur 5 durch das farbliche Hervorheben der entsprechenden Leitungen 11 zeigt. Sollte der Ladezustand der Batterie zu niedrig sein, kann über den Verbrennungsmotor bei gelöster Kupplung K1 der Generator betrieben werden, so dass auch bei (teil-)entladenem Akkumulator eine Rückwärtsfahrt gewährleistet ist.

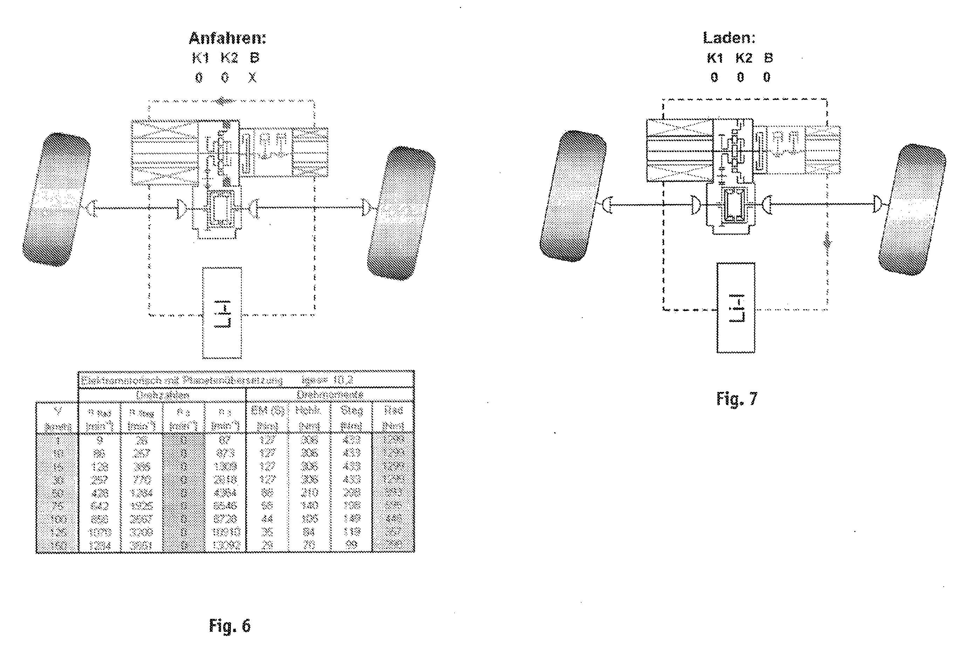

Die Möglichkeit, die Hybrid-Antriebseinheit im Lok-Betrieb (serieller Hybrid) zu verwenden, illustriert Figur 6. Über den Verbrennungsmotor wird der Generator angetrieben. Der erzeugte Strom versorgt die elektrische Antriebsmaschine auf direktem Weg. Dadurch ist ein stufenloser, elektrischer Antrieb möglich. Wie bei den anderen Fahrzuständen kann hierbei auch das Planetengetriebe als Zweiganggetriebe genutzt werden.

Figur 7 verdeutlicht weiter, dass für den Fall, dass ein niedriger Batterieladezustand kein elektrisches Fahren ermöglicht, zum Laden der Generator direkt vom Verbrennungsmotor betrieben werden kann. Hierzu ist die Kupplung K1 geöffnet.

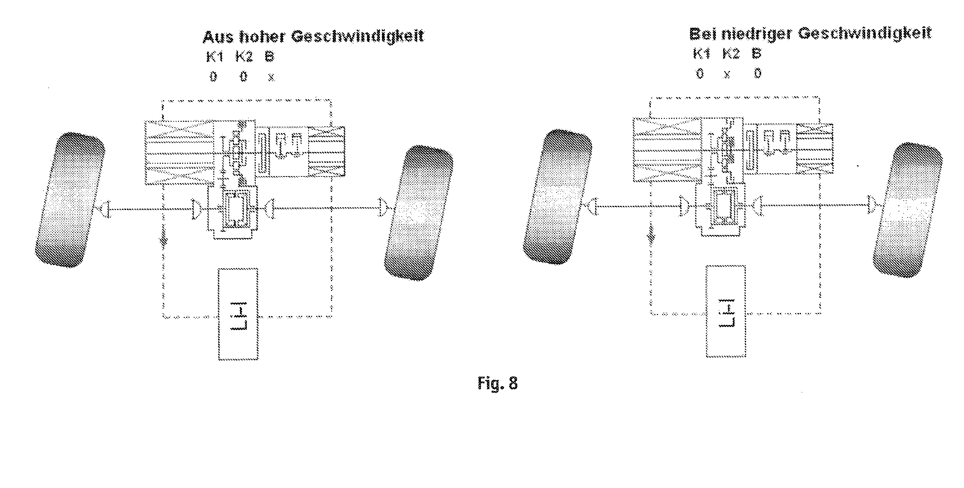

Beim Rekuperieren (Bremsen), das anhand von Figur 8 beschrieben wird, treibt das Fahrzeug die elektrische Antriebsmaschine an. Damit das Planetengetriebe das Drehmoment auf die Sonnenwelle übertragen kann, muss entweder die Bremse B oder die Kupplung K2 geschlossen sein, da ansonsten das Planetengetriebe frei durchdrehen würde. Vorzugsweise wird bei höheren Geschwindigkeiten die Bremse B aktiviert, um die Drehzahl an der E-Maschine bzw. am Generator nicht so hoch treiben zu müssen. Bei niedrigen Geschwindigkeiten kann es günstiger sein, die Kupplung K2 zu schließen, um den Generator oder um die elektrische Antriebsmaschine generatorisch, also nach Art eines Generators, möglichst kennfeldoptimal betreiben zu können.

Während in den vorstehend beschriebenen Figuren immer davon ausgegangen worden ist, dass die Antriebseinheit einen mit dem Verbrennungsmotor gekoppelten, von der elektrischen Antriebsmaschine separaten Generator aufweist, zeigen die nachfolgenden Figuren, dass mit dem HybridAntriebssystem auch der Antrieb ohne einen solchen Generator und nur mit einem kombinierten Generator/Motor möglich ist. Um den Kostenaufwand für den Generator zu sparen, kann der gleiche konstruktive Aufbau von Planetengetriebe und E-Maschine im Sinne eines "Range Extenders" genutzt werden.

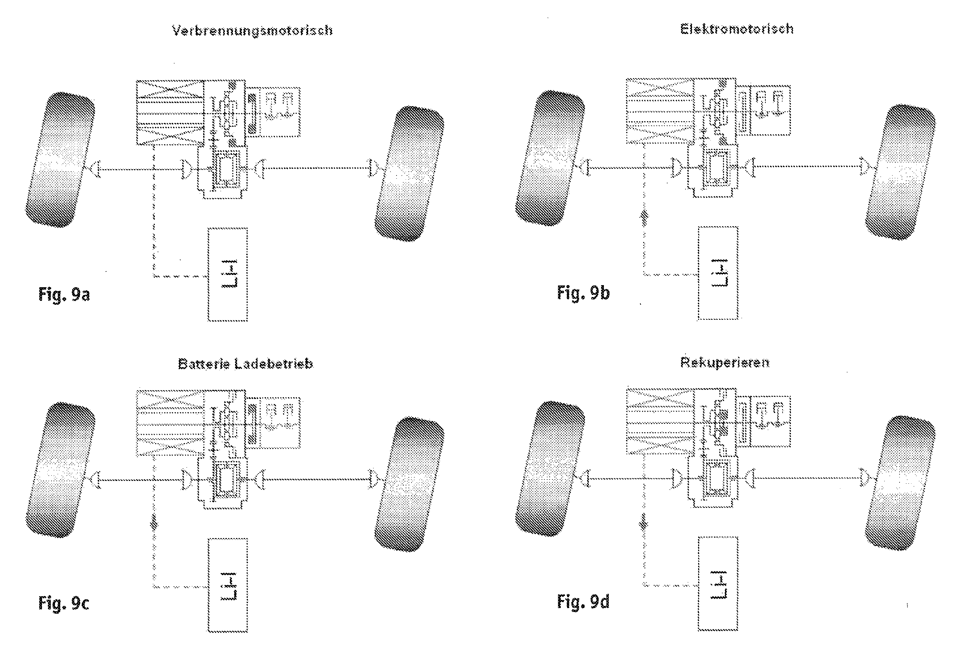

Für den rein verbrennungsmotorischen Betrieb wird, wie in Figur 9a für Fall des Anfahrens entsprechend des linken Bildes in Figur 2 gezeigt, Kupplung K1 und Bremse B geschlossen. Der Rotor der elektrischen Antriebsmaschine rotiert mit quasi verlustfrei mit. Bei dem in Figur 9b gezeigten rein elektromotorischen Antrieb gilt für denselben Fahrzustand, dass Kupplung K1 und K2 offen sind, während Bremse B geschlossen ist. Es fließt Strom von der Batterie zum elektromotorischen Antrieb. Im Batterieladebetrieb, der in Figur 9c gezeigt ist, wird die E-Maschine als Generator genutzt, indem diese vom Verbrennungsmotor angetrieben wird. Hierzu wird die Kupplung K1 geschlossen. Die Kupplung K2 und die Bremse B bleiben dabei geöffnet, da ansonsten der Kraftfluss zu den Rädern hergestellt wäre. Beim in Figur 9d dargestellten Rekuperieren im Schubbetrieb wird Kupplung K1 geschlossen, so dass die auf der Straße abrollenden Räder die elektrische Maschine antreiben, so dass diese Energie erzeugen kann, die in der Batterie zwischengespeichert wird.

Durch den Wegfall des Generators läst sich eine sehr kostengünstige Lösung darstellen, ohne dass damit starke Einschränkungen in der Performance und Nutzungsfähigkeit einhergehen würden.

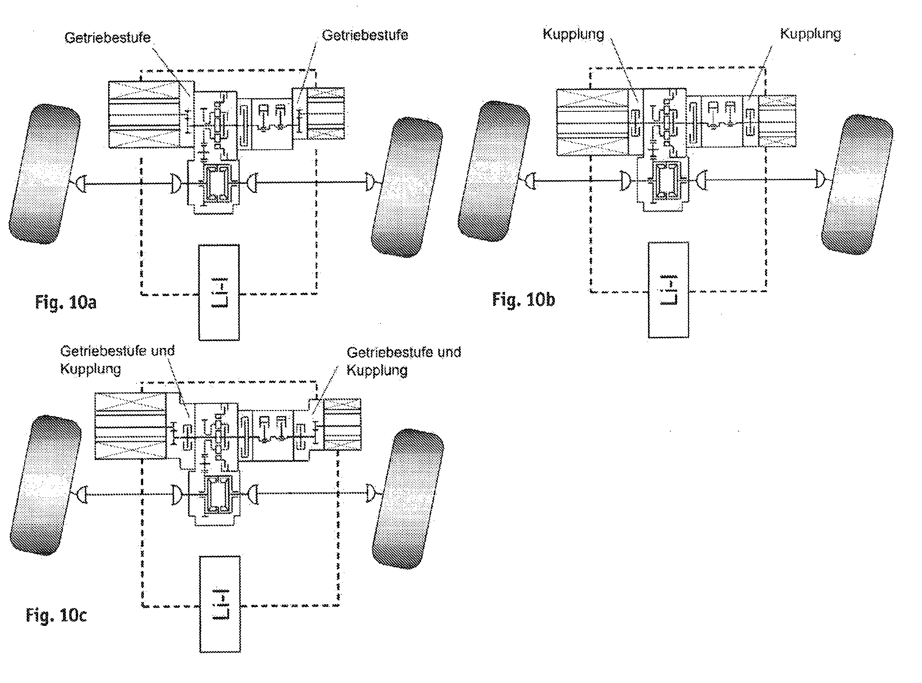

Figuren 10a, 10b und 10c zeigen weitere Varianten der Hybrid-Antriebseinheit mit zusätzlichen Getriebestufen und/oder zusätzliche Trennkupplung(en). Da elektrische Maschinen in der Regel ein deutlich breiteres Drehzahlband abdecken als Verbrennungsmotoren (wodurch bei gleicher Leistung Gewicht und Kosten gespart werden können), ist vorzugsweise entweder zwischen Verbrennungsmotor und Sonnenrad eine Übersetzung anzusetzen, und/oder - um die Drehzahlen im Planetengetriebe nicht zu hoch zu setzen - zwischen elektrischer Maschine und Sonne. Alternativ kann noch eine Kupplung zwischen elektrischer Maschine und Sonne vorgesehen sein, um die Massenträgheit und das Schleppmoment der elektrischen Maschine vom Antriebsstrang während des rein verbrennungsmotorischen Betriebs abkoppeln zu können. Auf diese Kupplung kann insbesondere verzichtet werden, wenn der Verbrennungsmotor zwecks Reduktion von Kosten und Gewicht sowie Optimierung des Verbrauchs so ausgelegt wird, dass er die dynamischen Anteile der Fahrzustände nicht abdecken kann, sondern nur die Grundlast der Fahrwiderstandskurve bedienen soll. In diesem Fall würde die Kupplung - da die elektrische Maschine für jede Änderung des Fahrzustands benötigt wird - nur zusätzliches Gewicht und Kosten verursachen und sollte deswegen vorzugsweise entfallen.

Je nach Auslegung der beiden Elektromaschinen, E-Motor und Generator, ist also eine Getriebestufe zwischen der Verbrennungskraftmaschine und den Elektromaschinen vorzusehen. Damit ist es möglich, dass die Maschinen im jeweils wirkungsgradoptimalen Bereich betrieben werden können. Des Weiteren kann, je nach Ausführung des Generators, eine Kupplung zwischen Verbrennungskraftmaschine und Generator angeordnet sein. Somit kann beim verbrennungsmotorischen Fahren der Generator vom Antriebstrang getrennt werden, wodurch der Wirkungsgrad des Antriebsstrangs gesteigert wird. Das Gleiche gilt für den Elektromotor. Es kann auch vorgesehen sein, den Generator - bezogen auf den Leistungsfluss - zwischen die Kupplungs-/Getriebebaugruppe und Verbrennungsmotor oder parallel zum Verbrennungsmotor anzuordnen, so dass zum Beispiel im Rekupera-tionsbetrieb der Verbrennungsmotor nicht zwingend mitgeschleppt werden muss. Auch kann es sich unter bestimmten Umständen, beispielsweise wenn die von der Kupplungs- und Getriebebaugruppe zur Verfügung gestellten Übersetzungen keinen kennfeldoptimalen Betrieb des Verbrennungsmotors gewährleisten würden, anbieten, eine weitere Getriebestufe zwischen Verbrennungsmotor und Kupplungs- und Getriebebaugruppe anzuordnen, um einen weitestgehend kennfeldoptimalen Betrieb des Verbrennungsmotor zu ermöglichen. Der Fachmann wird das Erfordernis einer zwischen der Kupplungs- und Getriebebaugruppe befindlichen zusätzlichen Kupplung oder Getriebestufe für den jeweiligen Anwendungsfall erkennen und diese entsprechend vorsehen.

Die vorgenannten Varianten des Antriebsstrangs mit zusätzlichen Getriebestufen und zusätzlichen Trennkupplungen kann, wie Figur 10c zeigt, auch kombiniert werden. Durch die Kombination von Getriebestufe und Kupplung wird das System noch flexibler hinsichtlich der Anpassung an die jeweiligen Kennfelder und hinsichtlich der Leerlaufverluste der beiden E-Maschinen.

Selbstverständlich ist die Erfindung nicht auf eine Anwendung auf den in den Figuren rein beispielhaft wiedergegebenen Vorderachsantrieb mit Frontmotor beschränkt. Die Erfindung ist außerdem nicht auf Hybrid-Antriebseinheiten beschränkt, bei denen verbrennungsmotorische Antriebsleistung und elektromotorische Antriebsleistung in das Sonnenrad eines Planetengetriebes eingeleitet werden. Die Antriebsleistungen können auch bestimmungsgemäß in ein anderes Eingangsglied der Kupplungs- und Getriebebaugruppe eingeleitet werden, bei einem Planetengetriebe also insbesondere in den Steg oder das Hohlrad. Auch ist der Abtrieb nicht zwingend über den Steg zu realisieren. Je nach Konzept und vor- bzw. nachgeschalteten Übersetzungsstufen kann auch eine andere Ausgestaltung sinnvoll sein, bei der der Leistungsabtrieb über die Sonne oder das Hohlrad erfolgt. Zum Blocken des Planetengetriebes ist außerdem nicht zwingend Steg mit Sonne zu verblocken. Selbstverständlich kann die Kupplung K2 auch so angeordnet sein, dass diese zwei andere Eingangsglieder miteinanderverblockt, beispielsweise den Steg mit dem Hohlrad.

Natürlich schließt es die Überlegung, dass in einem ersten und in einem zweiten Gang sowohl die verbrennungsmotorische als auch die elektromotorische Antriebsleistung in jeweils dasgleiche, erste Eingangsglied der Kupplungs- und Getriebebaugruppe eingeleitet wird und somit keine leistungsverzweigte Antriebsleistungsübertragung vorgesehen ist, nicht aus, dass eine weitere Kupplung vorgesehen sein kann, die einen leistungsverzweigten Betrieb ermöglicht. So kann beispielsweise zwischen Verbrennungsmotor und einem weiteren, zweiten Eingangsglied, insbesondere dem Hohlrad, eine dritte Kupplung K3 vorgesehen sein (in den Figuren nicht gezeigt), die Verbrennungsmotor und zweites Eingangsglied, gegebenenfalls mit einer dazwischen wirkenden, für den kennfeldoptimalen Betrieb des Verbrennungsmotors ausgelegten Übersetzungsstufe, miteinander koppelt. Ist dann die Kupplung K1 und die Kupplung K2 geöffnet, lässt sich zu dem nicht leistungsverzweigten Betrieb der Antriebseinheit im ersten und zweiten Gang außerdem ein leistungsverzweigter Betrieb realisieren, bei dem die elektromotorische Leistung ein erstes Eingangsglied und die Verbrennungsmotorische Leistung in ein zweites Eingangsglied eingeleitet wird, so dass die zuvor beschriebenen Vorteile des leistungsverzweigten Antriebs über ein Planetengetriebe realisierbar wäre.

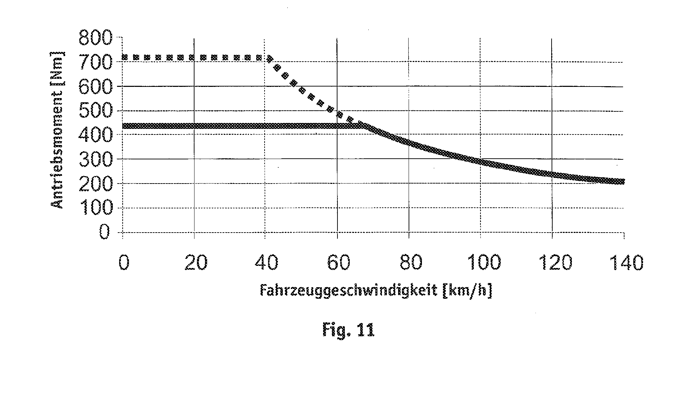

Unter Bezugnahme auf die Figuren 11 bis 13 werden nachfolgend einige weitere Aspekte der Hybrid-Antriebseinheit erläutert.

Anhand von Figur 11 wird zunächst eine bevorzugte Auslegung der Übersetzungsverhältnisse eines 2-Gang-Getriebes erläutert. Heute eingesetzte Elektroantriebe und serielle Hybride haben in der Regel nur eine Gangübersetzung. Dies ist möglich, da elektrische Maschinen über einen weiten Bereich (im Feldschwächebereich) eine konstante Leistung aufweisen und damit verschiedene Übersetzungsverhältnisse in diesem Bereich keine Wirkung zeigen.

In einem bestimmten Bereich nahe dem Stillstand sind siejedoch momentenbegrenzt (waagerechter Verlauf des geschwindigkeitsabhängigen Kurvenverlaufs bis zum Knick). Dies führt dazu, dass die Antriebsmaschine deutlich größer ausgelegt werden muss, als für den Normalbetrieb notwendig, um die geforderten Beschleunigungswerte im Niedriggeschwindigkeitsbereich sowie die geforderte Bergsteigfähigkeit darstellen zu können.

Wird die elektrische Maschine nun über ein 2-Gang-Getriebe angebunden, so können idealer weise die beiden Gangstufen so ausgelegt werden, dass sich der konstante Leistungsbereich im ersten Gang (gestrichelte Linie in Figur 11 nach dem Knick im Kurvenverlauf) nahtlos an den konstanten Leistungsbereich im zweiten Gang (durchgezogene Linie in Figur 11 nach dem Knick im Kurvenverlauf) anschließt.

Vorzugsweise ist dabei die Spreizung so gewählt, dass die erreichbare Höchstgeschwindigkeit im ersten Gang höher ist als die Geschwindigkeit, bei der der Elektromotor im zweiten Gang in seinem Moment begrenzt wird. Je nach Anwendungsfall kann dabei die Spreizung so gewählt werden, dass die Höchstgeschwindigkeit im ersten Gang möglichst nahe an dieser Übergangsgeschwindigkeit liegt, um ein möglichst hohes Anfahrmoment zu erzielen. Der Grenzfall wird dann erreicht, wenn Höchstgeschwindigkeit im ersten Gang mit der Grenzgeschwindigkeit im zweiten Gang übereinstimmt. Bei den üblicherweise benutzten permanent erregten Synchronmaschinen, bei denen die Grenzgeschwindigkeit rund 1/3 der Höchstgeschwindigkeit beträgt, ergibt sich daraus eine Spreizung in der Nähe von 3.

Damit während der Schaltung, die vorzugsweise drehmomentunterbrechungsfrei durchgeführt wird, die maximal zulässige Drehzahl nicht überschritten wird, kann die Spreizung um bis zu 10% reduziert werden, wodurch sich eine ideale Spreizung von 2,7 bis 2,8 ergibt.

Damit ist eine Antriebseinheit beschrieben, insbesondere eine Antriebseinheit für einen Antriebsstrang wie vorstehend beschrieben, der Antriebsstrang ein Mehrgangplanetengetriebe aufweist, an das eine elektrische Antriebsmaschine angebunden ist, wobei die Gangstufen derart ausgelegt sind, dass sich der konstante Leistungsbereich der elektrischen Antriebsmaschine im ersten Gang weitgehend nahtlos an den konstanten Leistungsbereich im zweiten Gang anschließt.

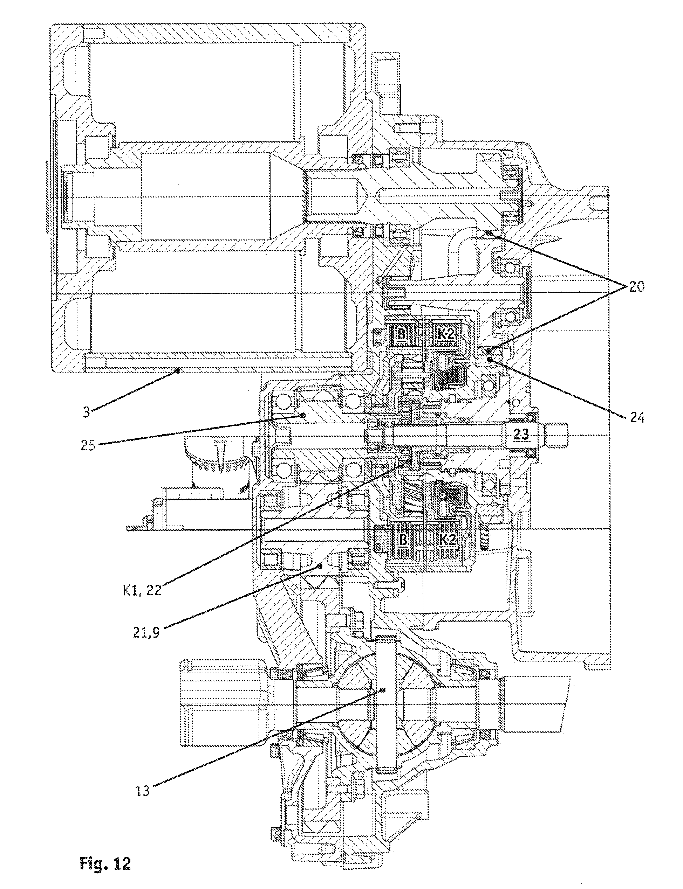

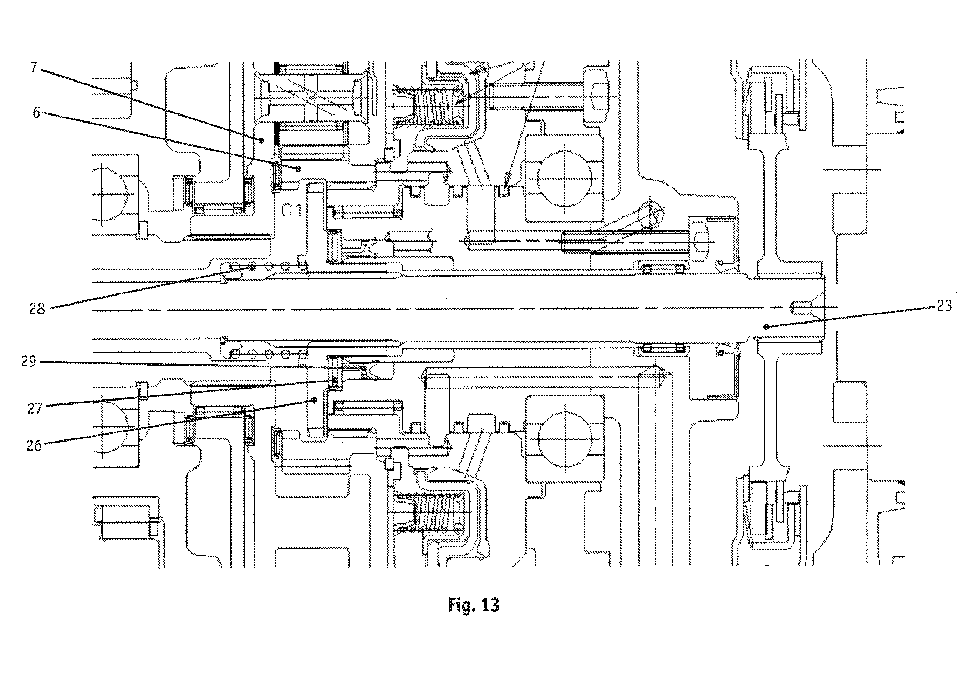

Figuren 12 und 13, die für das Verständnis der nachstehenden Ausführungen hinzuzuziehen sind, zeigen weitere konstruktive Einzelheiten der Hybrid-Antriebseinheit.

Eine besondere Herausforderung ergibt sich im Bezug auf den Platzbedarf, da ein ZweigangGetriebe (welches mindestens zwei Kupplungen bzw. Bremsen K2 und B benötigt), eine Kupplung K1 zum Verbrennungsmotor, eine Übersetzung 20 zwischen Elektromotor und Verbrennungsmotor sowie eine Drehrichtungskorrektur 21 (wenn die Anordnung im Vorderwagen dem Standard entsprechen soll) in einem sehr begrenzten Bauraum unterzubringen sind. Die Drehrichtungskorrektur 21 entspricht dabei der zu Figur 1 erwähnten Final Drive Übersetzungsstufe 9. Vorzugsweise werden dabei die Kupplung K2 und die Bremse B um das Planetengetriebe herum angeordnet, da die Kupplung bzw. Bremse - die zur Darstellung der vollen Lastschaltbarkeit bevorzugt reibschlüssig wirkend darzustellen sind - zur Bereitstellung der notwendigen Drehmomentkapazität einen Mindestdurchmesser benötigen. Werden Maßnahmen zur Synchronisation der zu kuppelnden Bauteile vorgesehen, kann die Kupplung K2 und die Bremse B selbstverständlich auch als formschlüssig wirkende Kupplungen konzipiert sein.

Als weitere Einsparung kann dann vorzugsweise die Kupplung, mit der die Verbrennungsmaschine von der Sonne abgekoppelt werden kann, innerhalb der Sonne angeordnet werden. Dabei ist diese Kupplung vorzugsweise als Klauenkupplung 22 ausgebildet. Zur Betätigung dieser Kupplung kann eine Hydraulik vorgesehen werden, wobei die Druckölversorgung durch das gleiche Element geleitet werden kann, wie die Ölversorgung der Planetengetriebekupplungen.

Eine weitere vorzugsweise Gestaltung kann vorsehen, den Abtrieb des Elektromotors mit der vorzusehenden Übersetzung zumindest teilweise fluchtend zu dem Kupplungspaket anzuordnen, vorzugsweise leicht in Richtung Verbrennungskraftmaschine versetzt, so dass die letzte Gangstufe direkt an das Kupplungspaket anschließt bzw. an diesem angreift. Dabei kann die Betätigung einer Planetengetriebekupplung so angeordnet sein, dass wesentliche Elemente wie zum Beispiel der Ölraum, der den hydraulischen Kolben bei einer hydraulisch aktuierten Kupplung aufnimmt, durch das gleiche Element gebildet werden, welches auch die Sonne sowie die Gangstufe zum Elektromotor ausbildet.

Auch sollte die elektrische Maschine fluchtend mit dem drehrichtungskorrigierenden Element 21 angeordnet werden, welches vorzugsweise auf der dem Verbrennungsmotor abgewandten Seite an das Kupplungspaket anschließt. Das Element 21 kann dabei zum Beispiel eine Zwischenwelle (drehrichtungskorrigierend) oder ein Riemen- oder Kettenantrieb (in der Regel nicht drehrichtungskorrigierend) des Achsantriebs sein. Letzteres ist zu bevorzugen, wenn die Antriebseinheit zur Hochachse um 180° gedreht eingebaut ist und die Drehrichtung des Verbrennungsmotors beibehalten wird.

Die Figur 13 verdeutlicht weitere Besonderheiten der erfindungsgemäßen Antriebseinheit.

Um eine kurz bauende Anordnung für Fahrzeuge mit Front-Quer-Aggregat zu ermöglichen, wird die nachfolgend erläuterte Anordnung gewählt: Der Verbrennungsmotor, der die Motorwelle 23 antreibt, der Eintrieb 24 des Elektromotors (also das Antriebsteil, mit dem die elektromotorische Leistung letztlich in das Planetengetriebe eingeleitet wird), das Plantetengetriebe selbst und auch das Achsantriebsritzel/Ausgangsglied 25, von dem die Antriebsleitung letztlich abgenommen und von dem ausgehend die Antriebsleistung über eine nachgeschaltete Getriebestufe zum Antriebsachsdifferential 13 weitergeleitet wird, sind koaxial angeordnet. Der zum Verbrennungsmotor achsparallel angeordnete Elektromotor 3 ist über eine oder mehrere Zahnradstufe(n) 20 zur Anbindung des Verbrennungsmotors an das Planetenzweiganggetriebe angeschlossen. Der Achsabstand ist dabei bewusst so gewählt, dass die elektrische Antriebsmaschine zumindest teilweise neben Achsantrieb bzw. Planetengetriebe angeordnet werden kann.

Die nachfolgend beschriebene Figur 13 veranschaulicht im Detail, wie der Verbrennungsmotor mit dem Planetengetriebe schaltbar gekoppelt ist und wie diese Kopplung bzw. Entkopplung vonstatten geht. Die vom Verbrennungsmotor angetriebene Motorwelle 23 und das Sonnenrad 6 des (Zweigang-) Planetengetriebes sind koppelbar. Die Kopplung erfolgt bevorzugt bei synchroner oder annähernd synchroner Drehzahl von Motorwelle 23 und Sonnenrad 6, was zusätzliche Maßnahmen für eine mechanische Synchronisation entbehrlich macht. Dabei liegt die Motorwelle 23 koaxial zu und innerhalb des Sonnenrades 6.

Ein Koppelglied 26 ist auf der Motorwelle 23 drehfest und axial verschiebbar angeordnet. Eine axiale Verschiebung des Koppelgliedes 26 zur Koppelung erfolgt durch geeignete Aktuatorik, die in der in Figur 13 dargestellten Ausgestaltung beispielhaft hydraulisch über Kolben 29 erfolgt. Es ist ein Axiallager 27 zum Drehzahlausgleich vorgesehen. Eine Feder 28 spannt das das System gegen die Federkraft vor. Das Koppelglied 26 wirkt bevorzugt formschlüssig und kann durch Druckbeaufschlagung mit dem Sonnenrad 6 in Eingriff gebracht werden. Alternativ kann selbstverständlich auch vorgesehen sein, dass das Koppelglied 26 drehfest relativ zum Sonnenrad 6 ist und zum Eingriff mit der Motorwelle 23 axial verschiebbar ist.

Bei dem Verfahren zum Betrieb der beschriebenen Hybrid-Antriebseinheit sind noch folgende Überlegungen relevant:

Um die Kupplungsgröße und den Kupplungsverschleiß zu minimieren, wird das System vorzugsweise so ausgelegt, dass die Kupplungen nicht als Anfahrelement genutzt werden. Dies wird erreicht, indem im Stillstand eine eventuell zwischen Elektromotor und Getriebe vorhandene Kupplung geschlossen wird und der erste Gang des Getriebes mit der zum Anfahren günstigeren Übersetzung gewählt wird. Das zum Anfahren benötigte Drehmoment wird dann von der elektrischen Maschine bereitgestellt. Der Verbrennungsmotor wird erst dann hinzugekoppelt, wenn die Eingangswellendrehzahl des Getriebes größer als die Leerlaufdrehzahl des Verbrennungsmotors ist. Ist dabei die Kupplung zwischen Verbrennungsmotor und Getriebe als formschlüssige Kupplung ausgeführt, wird erst die Verbrennungsmotordrehzahl an die Eingangswellendrehzahl angepasst, bevor die Kupplung betätigt wird. Dies kann entweder über eine Steuerung der Kraftstoffund/oder Verbrennungsluftzufuhr erfolgen, oder aber durch ein durch einen mit dem Verbrennungsmotor gekoppelten Generator/Motor aufmoduliertes Drehmoment geschehen.

Um weitere Kosten zu sparen, kann der Generator/Motor, der vorzusehen ist, wenn das System auch seriellhybridisch betrieben werden soll, oder wenn keine Kupplung als Anfahrelement verwendet werden soll, auch zum Antrieb von Nebenaggregaten, beispielsweise eines vorhandenen Klimaanlagenkompressors, verwendet werden. Außerdem kann die elektrische Antriebsmaschine dazu verwendet werden, den Verbrennungsmotor zu starten oder zu stoppen. Vorzugsweise wird dazu der Generator/Motor in dem Riementrieb angeordnet, der den Verbrennungsmotor mit dem Klimaanlagenkompressor verbindet. Vorteilhaft werden dabei in der Riemenscheibe integrierte Kupplungen vorgesehen, die entweder den Klimaanlagenkompressor oder den Verbrennungsmotor vom Riementrieb abkoppeln können. Von Vorteil ist es auch, wenn gleich große oder sogar identische Kupplungen verwendet werden.

Um den Generator/Motor so preiswert und effizient wie möglich zu gestalten, sollte er dabei als Hochdrehzahlmaschine mit Maximaldrehzahlen größer 10.000 1/min, besser 15.000 1/min ausgebildet sein. Um das notwendige Startdrehmoment am Verbrennungsmotor zur Verfügung zu stellen bzw. die notwendige Drehzahlanpassung durchzuführen, sollten die Riemenscheibendurchmesser von Generator/Motor und Verbrennungsmotor im Verhältnis der Maximaldrehzahlen stehen. Vorzugsweise beträgt somit das Verhältnis zwischen 1:2 und 1:4. Dabei kann der Klimaanlagenkompressor frei in der Drehzahl ausgelegt werden, der Durchmesser der Riemenscheibe ist entsprechend anzupassen.

### Bezugszeichenliste

- 1: Verbrennungsmotor (VKM)
- 2: Generator
- 3: elektrischer Antriebsmotor/E-Maschine (EM)
- 4: Planetengetriebe
- 5: Welle
- 6: Sonne
- 7: Steg
- 8: Hohlrad
- 9: Final Drive Übersetzungsstufe
- 10: Batterie/Akkumulator
- 11: Leitungen
- 12: Gehäuse
- 13: Differential
- 14: Seitenwellen

- K1: erste Kupplung
- K2: zweite Kupplung
- B: Bremse

- 20: Übersetzung VKM/EM / Zahnradstufen
- 21: Drehrichtung umkehrendes Element
- 22: Klauenkupplung
- 23: Motorwelle
- 24: Eintrieb E-Maschine
- 25: Achsantriebsritzel/Ausgangsglied
- 26: Koppelglied
- 27: Axiallager
- 28: Vorspannfeder
- 29: Hydraulikkolben

## Patentansprüche

1. Hybrid-Antriebseinheit für ein Hybridfahrzeug umfassend eine elektrische Antriebsmaschine (3), eine verbrennungsmotorische Antriebsmaschine (1) und eine kombinierte, als schaltbares Mehrganggetriebe fungierende Kupplungs- und Getriebebaugruppe, die ein MehrgangPlanetengetriebe (4) umfasst, das einen ersten Gang und einen zweiten Gang zur Verfügung stellt, wobei die elektromotorische Antriebsleistung und die verbrennungsmotorische Antriebsleistung im ersten Gang und im zweiten Gang in das Sonnenrad (6) der Getriebebaugruppe eingeleitet werden, **dadurch gekennzeichnet, dass** eine Kupplungsvorrichtung (K1, 22) vorgesehen ist, mit der der Verbrennungsmotor (1) mit dem Sonnenrad (6) formschlüssig koppelbar ist und die Kupplungseinrichtung (K1, 22) innerhalb des Sonnenrads (6) angeordnet ist.

2. Antriebseinheit nach Anspruch 1, **dadurch gekennzeichnet, dass** über eine erste Kupplung das Eingangsglied und das Abtriebsglied, insbesondere mit dem Steg (7) des Planetengetriebes, drehfest zueinander koppelbar sind.

3. Antriebseinheit nach einem der vorhergehenden Ansprüche, **dadurch gekennzeichnet, dass** die Getriebebaugruppe ein Hohlrad (8) aufweist, dass über eine Bremskupplung (B) drehfest gehalten werden kann.

4. Antriebseinheit nach einem der vorhergehenden Ansprüche, wobei die Antriebsleistung der E-Maschine (3) und die Antriebsleistung einer Verbrennungskraftmaschine (1) bedarfsweise gleichzeitig oder jeweils alternativ zueinander die Gesamtantriebsleistung gewährleisten.

5. Antriebseinheit nach einem der vorhergehenden Ansprüche, **dadurch gekennzeichnet, dass** an das Mehrgangplanetengetriebe (4) eine elektrische Antriebsmaschine (3) angebunden ist, wobei die Gangstufen derart ausgelegt sind, dass sich der konstante Leistungsbereich der elektrischen Antriebsmaschine (3) im ersten Gang weitgehend nahtlos an den konstanten Leistungsbereich im zweiten Gang anschließt.

6. Antriebseinheit nach einem der vorhergehenden Ansprüche, **dadurch gekennzeichnet, dass** der Verbrennungsmotor (1), der Eintrieb des Elektromotors (24), das Plantetengetriebe (4) und das Achsantriebsritzel/Ausgangsglied (25), koaxial angeordnet sind.

7. Verfahren zum Betrieb einer Antriebseinheit nach einem der vorhergehenden Ansprüche, wobei die Kupplungs- und Getriebebaugruppe ein Mehrgang-Planetengetriebe (4) und zumindest eine Kupplung (K2) und eine Bremse (B) umfasst, **gekennzeichnet durch** die Verfahrensschritte:
- Einbringen der Antriebsleistung in ein als erstes Eingangsglied des Planetengetriebes (4) fungierendes Sonnenrad (6) über eine Eingangswelle (5, 23),
- drehfestes Halten eines zweiten Gliedes des Planetengetriebes (4) mit der Bremse (B), insbesondere des Hohlrades (8), um einen ersten Gang zur Verfügung zu stellen,
- Verblocken von zwei Gliedern des Planetengetriebes (4) **durch** Schließen der Kupplung (K2), um einen zweiten Gang zur Verfügung zu stellen,
wobei bei geschlossener Kupplung (K2) die Bremse (B) geöffnet ist und bei betätigter Bremse (B) die Kupplung (K2) geöffnet ist, **dadurch gekennzeichnet, dass**
der Verbrennungsmotor mit dem Sonnenrad (6) über eine innerhalb des Sonnenrads befindliche Kupplungseinrichtung (K1, 22) formschlüssig gekoppelt wird.

8. Verfahren nach Anspruch 7, **dadurch gekennzeichnet, dass** ein Verbrennungsmotor (1) über eine Kupplungseinrichtung (K1, 22) mit dem als ersten Eingangsglied fungierenden Sonnenrad (6) formschlüssig gekuppelt wird, wobei die Drehzahl des Verbrennungsmotors (1) vor Betätigen der Kupplung (K1) an die Drehzahl der Eingangswelle (5, 23) angepasst wird.

9. Verfahren nach Anspruch 7 oder 8, **dadurch gekennzeichnet, dass** ein Rekuperationsbetrieb bei niedriger Fahrzeuggeschwindigkeit in einem Gang und bei hohen Fahrzeuggeschwindigkeiten in einem anderen Gang erfolgt.

10. Verfahren nach einem der Ansprüche 7, 8 oder 9, **dadurch gekennzeichnet, dass** ein Verbrennungsmotor (1) über eine Kupplungseinrichtung (K1, 22) mit dem als ersten Eingangsglied fungierenden Sonnenrad (6) formschlüssig gekuppelt wird und der Anfahrvorgang elektromotorisch erfolgt, wobei der Verbrennungsmotor (1) erst hinzugekoppelt wird, wenn die Eingangswellendrehzahl die Leerlaufdrehzahl des Verbrennungsmotors (1) erreicht.

## Claims

1. A hybrid drive unit for a hybrid vehicle, comprising an electric power plant (3), an internal combustion power plant (1) and a combined clutch and transmission assembly that acts as a shiftable multispeed transmission and comprises a multispeed planetary gear transmission (4) providing a first gear and a second gear, wherein the driving power of the electric motor and the driving power of the internal combustion engine are introduced into the sun wheel (6) of the transmission assembly in the first gear and in the second gear, **characterized in that** a coupling device (K1, 22) is provided, by means of which the internal combustion engine (1) can be positively coupled to the sun wheel (6), and **in that** the coupling device (K1, 22) is arranged within the sun wheel (6).

2. The drive unit according to Claim 1, **characterized in that** the input element and the output element can be coupled to one another in a torque-proof fashion, particularly with the planet spider (7) of the planetary gear transmission, by means of a first clutch.

3. The drive unit according to one of the preceding claims, **characterized in that** the transmission assembly features a crown wheel (8) that can be held in a torque-proof fashion by means of a brake clutch (B).

4. The drive unit according to one of the preceding claims, wherein the driving power of the electric motor (3) and the driving power of the internal combustion engine (1) respectively ensure the overall driving power simultaneously or alternatively to one another as required.

5. The drive unit according to one of the preceding claims, **characterized in that** an electric power plant (3) is connected to the multispeed planetary gear transmission (4), wherein the gears are realized in such a way that the constant power range of the electric power plant (3) in the first gear is linked to the constant power range in the second gear in a largely smooth fashion.

6. The drive unit according to one of the preceding claims, **characterized in that** the internal combustion engine (1), the drive input of the electric motor (24), the planetary gear transmission (4) and the axle driving pinion/output element (25) are arranged coaxially.

7. A method for operating a drive unit according to one of the preceding claims, wherein the clutch and transmission assembly comprises a multispeed planetary gear transmission (4) and at least one clutch (K2) and one brake (B), **characterized by** the procedural steps of:
- introducing the driving power into a sun wheel (6) that acts as a first input element of the planetary gear transmission (4) by means of an input shaft (5, 23),
- holding a second element of the planetary gear transmission (4), particularly the crown wheel (8), in a torque-proof fashion by means of the brake (B) in order to provide a first gear,
- interlocking two elements of the planetary gear transmission (4) by closing the clutch (K2) in order to provide a second gear,
wherein the brake (B) is released when the clutch (K2) is closed and the clutch (K2) is open when the brake (B) is actuated, **characterized in that**
the internal combustion engine is positively coupled to the sun wheel (6) by means of a coupling device (K1, 22) situated within the sun wheel.

8. The method according to Claim 7, **characterized in that** an internal combustion engine (1) is positively coupled to the sun wheel (6) that acts as first input element by means of a coupling device (K1, 22), wherein the speed of the internal combustion engine (1) is adapted to the speed of the input shaft (5, 23) prior to the actuation of the clutch (K1).

9. The method according to Claim 7 or 8, **characterized in that** a recuperative operation takes place in one gear at a low vehicle speed and in another gear at high vehicle speeds.

10. The method according to one of Claims 7, 8 or 9, **characterized in that** an internal combustion engine (1) is positively coupled to the sun wheel (6) that acts as first input element by means of a coupling device (K1, 22) and the driveaway is realized with the electric motor, wherein the internal combustion engine (1) is only coupled in once the input shaft speed reaches the idle speed of the internal combustion engine (1).

## Revendications

1. Unité d'entraînement hybride pour un véhicule hybride comprenant une machine d'entraînement électrique (3), une machine d'entraînement (1) à moteur à combustion et un bloc d'embrayages et d'engrenages agissant en tant qu'engrenage multi-vitesses embrayable, qui comprend un engrenage planétaire multi-vitesses (4) qui fournit une première vitesse et une seconde vitesse, sachant que la puissance d'entraînement électromotrice et la puissance d'entraînement par moteur à combustion en première vitesse et en seconde vitesse sont introduites dans la roue solaire (6) du bloc d'engrenages, **caractérisée en ce qu'**un dispositif d'embrayage (K1, 22) est prévu, avec lequel le moteur à combustion (1) peut être couplé à la roue solaire (6) par complémentarité de formes, et le dispositif d'embrayage (K1, 22) est disposé à l'intérieur de la roue solaire (6).

2. Unité d'entraînement selon la revendication 1, **caractérisée en ce que** le membre primaire et le membre de sortie, en particulier avec la traverse (7) de l'engrenage planétaire, peuvent être couplés entre eux en étant fixes en rotation, via un premier embrayage.

3. Unité d'entraînement selon la revendication 1 ou 2, **caractérisée en ce que** le bloc d'engrenages présente une couronne (8) qui peut être maintenue fixe en rotation par un accouplement de frein (B).

4. Unité d'entraînement selon l'une des revendications précédentes, dans laquelle la puissance d'entraînement de la machine électrique (3) et la puissance d'entraînement d'un moteur à combustion interne (1) garantissent la puissance d'entraînement totale en même temps ou respectivement alternativement l'une par rapport à l'autre selon les besoins.

5. Unité d'entraînement selon l'une des revendications précédentes, **caractérisée en ce qu'**une machine d'entraînement électrique (3) est reliée à l'engrenage planétaire multi-vitesses (4), sachant que les paliers de vitesse sont ainsi conçus que la plage de puissance constante de la machine d'entraînement électrique (3) en première vitesse se joint sans interruption dans une large mesure à la plage de puissance constante en seconde vitesse.

6. Unité d'entraînement selon l'une des revendications précédentes, **caractérisée en ce que** le moteur à combustion (1), l'entraînement du moteur électrique (24), l'engrenage planétaire (4) et le pignon d'entraînement d'essieu/le membre de sortie (25) sont disposés coaxialement.

7. Procédé destiné au fonctionnement d'une unité d'entraînement selon l'une des revendications précédentes, dans lequel le bloc d'embrayages et d'engrenages comprend un engrenage planétaire multi-vitesses (4) et au moins un embrayage (K2) et un frein (B), **caractérisé par** les étapes de procédé :
- d'apport de la puissance d'entraînement dans une roue solaire (6) agissant en tant que premier membre primaire de l'engrenage planétaire (4), via un arbre primaire (5, 23),
- de maintien fixe en rotation d'un second membre de l'engrenage planétaire (4) avec le frein (B), en particulier de la couronne (8), pour fournir une première vitesse,
- de blocage de deux membres de l'engrenage planétaire (4) par la fermeture de l'embrayage (K2), pour fournir une seconde vitesse,
sachant que lorsque l'embrayage (K2) est fermé, le frein (B) est ouvert et lorsque le frein (B) est actionné, l'embrayage (K2) est ouvert, **caractérisé en ce que**
le moteur à combustion est couplé par complémentarité de formes avec la roue solaire (6) via un dispositif d'embrayage (K1, 22) se trouvant à l'intérieur de la roue solaire.

8. Procédé selon la revendication 7, **caractérisé en ce qu'**un moteur à combustion (1) est couplé par complémentarité de formes avec la roue solaire (6) agissant en tant que premier membre primaire, via un dispositif d'embrayage (K1, 22), sachant que le régime du moteur à combustion (1) avant d'actionner l'embrayage (K1) est adapté au régime de l'arbre primaire (5, 23).

9. Procédé selon la revendication 7 ou 8, **caractérisé en ce qu'**une activité de récupération a lieu en cas de vitesse basse du véhicule dans une vitesse et en cas de vitesses élevées du véhicule dans une autre vitesse.

10. Procédé selon l'une des revendications 7, 8 ou 9, **caractérisé en ce qu'**un moteur à combustion (1) est couplé par complémentarité de formes avec la roue solaire (6) agissant en tant que premier membre primaire, via un dispositif d'embrayage (K1, 22), et la procédure de démarrage s'effectue par moteur électrique, sachant que le moteur à combustion (1) n'est couplé que lorsque le régime de l'arbre primaire atteint le régime à vide du moteur à combustion (1).
